# EUROPEAN PATENT APPLICATION

(11) **EP 4 492 642 A1**
(43) Date of publication of application: **15.01.2025**
(21) Application number: 23814708.6
(22) Date of filing: 16.03.2023
(51) Int. Cl.: H02K 1/28, H02K 7/04, H02K 21/14

(54) **ROTOR ASSEMBLY, PERMANENT MAGNET SYNCHRONOUS ELECTRIC MOTOR, ELECTRIC MOTOR DRIVEN COMPRESSOR, AIR CONDITIONING SYSTEM AND VEHICLE**

(30) Priority: 31.05.2022 CN 202210615605; 31.05.2022 CN 202221359939 U; 31.05.2022 CN 202210629322; 31.05.2022 CN 202221359709 U
(71) Applicant: Anhui Welling Auto Parts Corporation Limited, Hefei, Anhui 230088 (CN); Guangdong Welling Auto Parts Corporation Limited, Foshan, Guangdong 528311 (CN)
(72) Inventor: SUN, Guowei, Hefei, Anhui 230088 (CN); ZHAO, Dongliang, Hefei, Anhui 230088 (CN); YANG, Kaicheng, Hefei, Anhui 230088 (CN)
(74) Representative: RGTH
(86) International application number: PCT/CN2023/081975
(87) International publication number: WO 2023/231510

(57) **Abstract**

Provided are a rotor assembly, a permanent magnet synchronous motor, an electric compressor, an air conditioning system, and a vehicle. The rotor assembly (1) comprises a rotor body (11) and at least one rotor rivet (12). The rotor body (11) comprises a rotor core (111). End plates (112) are arranged at two ends of the rotor core (111), respectively, and at least one balance weight (113) is disposed at a side of at least one of the end plates (112). The at least one rotor rivet (12) fixes the rotor body (11) into one piece. Each of the at least one rotor rivet (12) comprises a rod portion (121), a head portion (122) and a riveting portion (123), and the head portion (122) and the riveting portion (123) are located at two ends of the rod portion (121). One or more of the at least one balance weight (113) is a first balance weight having a rivet hole (a). The rivet hole (a) has a first hole segment (1131) configured to engage with the rod portion (121) and a second hole segment (1132) configured to engage with the riveting portion (123).

## Description

### CROSS-REFERENCE TO RELATED APPLICATIONS

This application claims priority to Chinese Patent Application No. 202210615605.6 filed on May 31, 2022, Chinese Patent Application No. 202221359939.3 filed on May 31, 2022, Chinese Patent Application No. 202210629322.7 filed on May 31, 2022, and Chinese Patent Application No. 202221359709.7 filed on May 31, 2022, the entire contents of which are incorporated herein by reference.

### FIELD

The present disclosure relates to the technical field of manufacturing of motor devices, and more particularly, to a rotor assembly, a permanent magnet synchronous motor, an electric compressor, an air conditioning system, and a vehicle.

### BACKGROUND

As is well known, permanent magnet synchronous motors have been widely used in the field of electric compressors due to their simple structure, high efficiency, and high motor power density. When an electric compressor is mounted on a vehicle, in particular on a four-wheel drive vehicle or on a hybrid vehicle, there are relatively high requirements for vibration shock resistance of the electric compressor, which typically ranges from 10 g to 50 g, where g represents a standard gravity acceleration. When the electric compressor is in operation, a temperature of a rotor will change within a wide range. Due to the temperature changes, various components of the rotor will expand or contract. Since balance weights, end plates, riveting pins, and rotor cores are made of different materials of different thermal expansion coefficients, fastening structures formed at a normal temperature will have tiny gaps at an extreme temperature. When a gap is generated, under an impact of high-intensity vibration and an action of residual stress, a flange part of the riveting pin will fail and then be broken, resulting in damage on the rotor and compressor failure. There is room for improvement.

### SUMMARY

The present disclosure aims to solve, at least to some extent, one of the technical problems in the related art. To this end, a first object of the present disclosure is to provide a rotor assembly, which can greatly improve structural stability of the rotor assembly and enhances reliability of an electric compressor by optimizing an engagement structure between a rotor rivet and a balance weight and improving riveting process.

The rotor assembly according to an embodiment of the present disclosure comprises a rotor body and a rotor rivet. The rotor body comprises a rotor core, end plates, and a balance weight. A permanent magnet is embedded within the rotor core, the end plates are arranged respectively at two axial ends of the rotor core, and balance weight is disposed at a side of the end plates facing away from the rotor core. The rotor rivet axially penetrates the rotor body to fix the rotor body into one piece. The rotor rivet comprises a rod portion, a head portion, and a riveting portion, and the head portion and the riveting portion are located at two ends of the rod portion in a length direction of the rod portion, respectively. At least one balance weight is a first balance weight having a rivet hole. The rivet hole has a first hole segment configured to engage with the rod portion and a second hole segment configured to engage with the riveting portion. The second hole segment has an expanded hole contour relative to the first hole segment, and the riveting portion is at least partially filled in the second hole segment.

In the rotor assembly according to some embodiments of the present disclosure, the second hole segment has a cross-sectional area gradually increasing in a direction away from the first hole segment.

In the rotor assembly according to some embodiments of the present disclosure, the second hole segment is fully filled with the riveting portion.

In the rotor assembly according to some embodiments of the present disclosure, the riveting portion comprises a sunk section located within the second hole segment and an exposed section located outside the second hole segment and protruding from a surface of the first balance weight.

In the rotor assembly according to some embodiments of the present disclosure, the rod portion has a diameter of D, and the riveting portion has a maximum diameter of D0, where 1.2D≤D0≤2D.

In the rotor assembly according to some embodiments of the present disclosure, the rotor rivet has a hardness ranging from HRB50 to HRB200.

In the rotor assembly according to some embodiments of the present disclosure, the riveting portion is of an imperforate solid structure, and the rotor rivet has a tensile strength τ satisfying 0.2·τ≤M·r· π·(n/D)²/225≤0.7·τ, where r represents a distance between a central axis of the rod portion and a central axis of the rotor core, M is a mass of the balance weight, n is a maximum rotational speed of the rotor assembly, and D is a diameter of the rod portion.

In the rotor assembly according to some embodiments of the present disclosure, the rotor body has magnetic poles with the number of A, and a number of the rotor rivet is B, where B≤A-2.

In the rotor assembly according to some embodiments of the present disclosure, the rotor rivet is disposed between two adjacent magnetic poles of the rotor body.

In the rotor assembly according to some embodiments of the present disclosure, the rotor rivet comprises a plurality of rotor rivets arranged at intervals in a circumferential direction of the rotor core, and the riveting portion of each of the plurality of rotor rivets are located at one side of the rotor core in an axial direction of the rotor core.

In the rotor assembly according to some embodiments of the present disclosure, the rotor core has an outer radius of R, where 0.5<r/R<0.9.

In the rotor assembly according to some embodiments of the present disclosure, the rod portion has a diameter of D ranging from 3 mm to 6 mm.

In the rotor assembly according to some embodiments of the present disclosure, two balance weights of different masses are arranged at two sides of the rotor body, respectively, and the heavier balance weight of the two balance weights has a mass of M.

In the rotor assembly according to some embodiments of the present disclosure, at least one balance weight is a third balance weight. The riveting portion is disposed at the third balance weight. The third balance weight has a radial width of W greater than 2D.

In the rotor assembly according to some embodiments of the present disclosure, the end plates sandwiched between the rotor core and the balance weight on which the riveting portion is disposed has a thickness greater than or equal to 0.8 mm.

In the rotor assembly according to some embodiments of the present disclosure, the riveting portion has a volume greater than or equal to a volume of the head portion; and/or the riveting portion has a diameter greater than or equal to a diameter of the head portion.

The present disclosure further provides a permanent magnet synchronous motor.

The permanent magnet synchronous motor according to the embodiments of the present disclosure comprises a stator assembly and a rotor assembly. The rotor assembly is rotatable relative to the stator assembly, and is the rotor assembly according to any one of the above-mentioned embodiments.

The present disclosure further provides an electric compressor.

The electric compressor according to the embodiments of the present disclosure comprises a compression component and a drive component. The drive component is configured to drive the compression component to perform a compression operation, and the drive component comprises the permanent magnet synchronous motor according to the above-mentioned embodiments.

The present disclosure further provides an air conditioning system.

The air conditioning system according to the embodiments of the present disclosure comprises the electric compressor according to the above-mentioned embodiments.

The present disclosure further provides a vehicle.

The vehicle according to the embodiments of the present disclosure comprises a vehicle body and an air conditioning system mounted at the vehicle body. The air conditioning system is the air conditioning system according to the above-mentioned embodiments.

The vehicle, the air conditioning system, the electric compressor, the permanent magnet synchronous motor, and the above-mentioned rotor assembly have the same advantages over the existing technology, and thus the description thereof will be omitted herein.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a schematic structural view of a rotor assembly according to an embodiment of the present disclosure;
FIG. 2 is a top view of a rotor assembly according to an embodiment of the present disclosure;
FIG. 3 is a cross-sectional view taken along line A-A in FIG. 2;
FIG. 4 is an enlarged view at part B in FIG. 3;
FIG. 5 is a schematic structural view of a rotor rivet according to some embodiments of the present disclosure before being riveted;
FIG. 6 is a schematic structural view of a rotor rivet according to an embodiment of the present disclosure after being riveted;
FIG. 7 is a schematic structural view of a rotor rivet according to an embodiment of the present disclosure after being riveted;
FIG. 8 is a schematic structural view of a rotor rivet according to an embodiment of the present disclosure after being riveted in another state;
FIG. 9 is a schematic structural view of an electric compressor according to an embodiment of the present disclosure;
FIG. 10 is a schematic structural view of a vehicle according to some embodiments of the present disclosure;
FIG. 11 is a cross-sectional view of a rotor assembly according to some embodiments of the present disclosure;
FIG. 12 is a schematic structural view of a rotor core according to some embodiments of the present disclosure;
FIG. 13 is a cross-sectional view of a rotor assembly according to some embodiments of the present disclosure;
FIG. 14 is a schematic view of a rotor rivet according to some embodiments of the present disclosure before being processed;
FIG. 15 is a schematic view of a rotor rivet according to some embodiments of the present disclosure after being processed;
FIG. 16 is a top view of a balance weight according to some embodiments of the present disclosure;
FIG. 17 is a top view of an end plate according to some embodiments of the present disclosure;
FIG. 18 is a schematic view of an optimal position of a riveting point of a rotor core according to some embodiments of the present disclosure;
FIG. 19 is a schematic view of positions of a balance weight and a rotor core according to some embodiments of the present disclosure with r/R being less than 0.5;
FIG. 20 is a schematic view of positions of a balance weight and a rotor core according to some embodiments of the present disclosure with r/R being approximate to 0.7;
FIG. 21 is a schematic view of positions of a balance weight and a rotor core according to some embodiments of the present disclosure with when r/R being greater than 0.7);
FIG. 22 is a schematic graph of a height and a cross-sectional area of a balance weight changing versus a ratio of r/R according to some embodiments of the present disclosure;
FIG. 23 shows changes of a direct-axis inductance Ld and a quadrature-axis inductance Lq of a rotor assembly as a diameter of a riveting pin is changed according to some embodiments of the present disclosure;

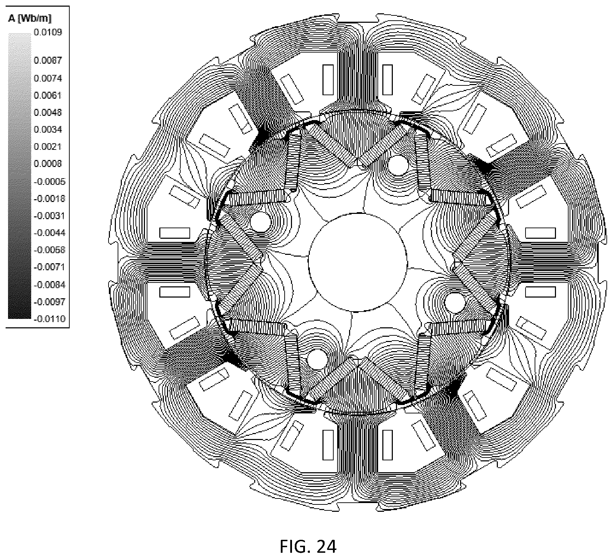

FIG. 24 is a schematic view of distribution of a magnetic field line of a rotor assembly according to some embodiments of the present disclosure with a diameter of a rivet hole being 4.2 mm;

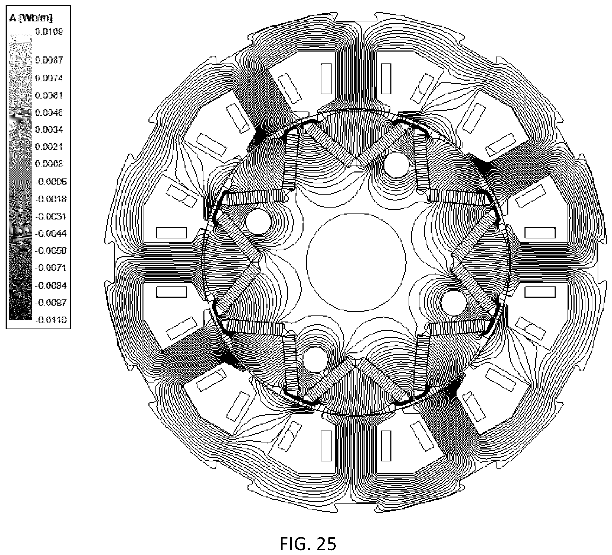

FIG. 25 is a schematic view of distribution of a magnetic field line of a rotor assembly according to some embodiments of the present disclosure with a diameter of a rivet hole being 5.2 mm; and

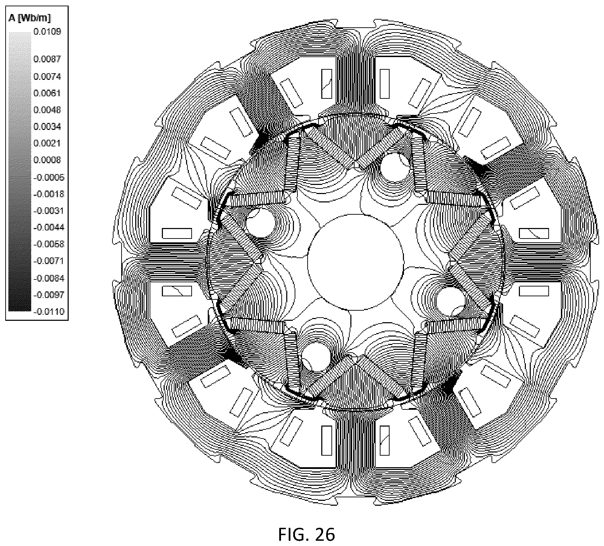

FIG. 26 is a schematic view of distribution of a magnetic field line of a rotor assembly according to some embodiments of the present disclosure with a diameter of a rivet hole being 6 mm.

### Reference numerals:

Vehicle 1000, electric compressor 100, rotor assembly 1, rotor body 11, rotor core 111, end plate 112, balance weight 113, first hole segment 1131, second hole segment 1132, magnetic pole 114, rivet hole a, riveting site b, rotor rivet 12, rod portion 121, head portion 122, riveting portion 123, sunk section 1231, exposed section 1232, drive shaft 2, compression component 3, high-pressure housing 41, high-pressure chamber 411, refrigerant outlet 412, low-pressure housing 42, low-pressure chamber 421, refrigerant inlet 422, support 43, cover plate 44, electronic control component 5, air conditioning system 200, vehicle body 300.

### DETAILED DESCRIPTION

Embodiments of the present disclosure will be described in detail below with refer ence to examples thereof as illustrated in the accompanying drawings, throughout which sam e or similar elements, or elements having same or similar functions, are denoted by same or s imilar reference numerals. The embodiments described below with reference to the drawings are illustrative only, and are intended to explain, rather than limiting, the present disclosure.

A rotor assembly 1 according to some embodiments of the present disclosure will be described below with reference to the accompanying drawings.

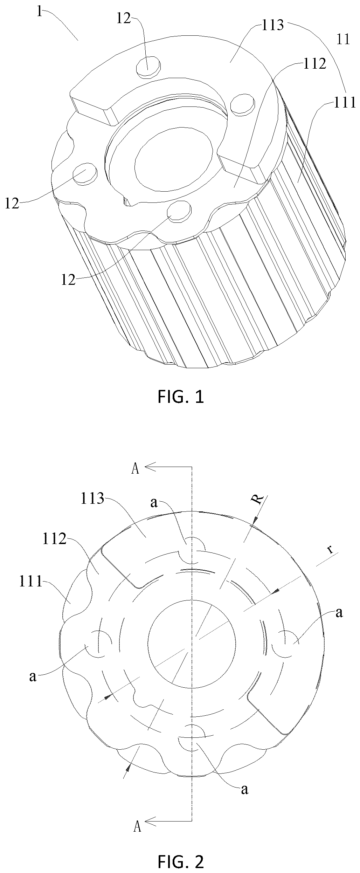

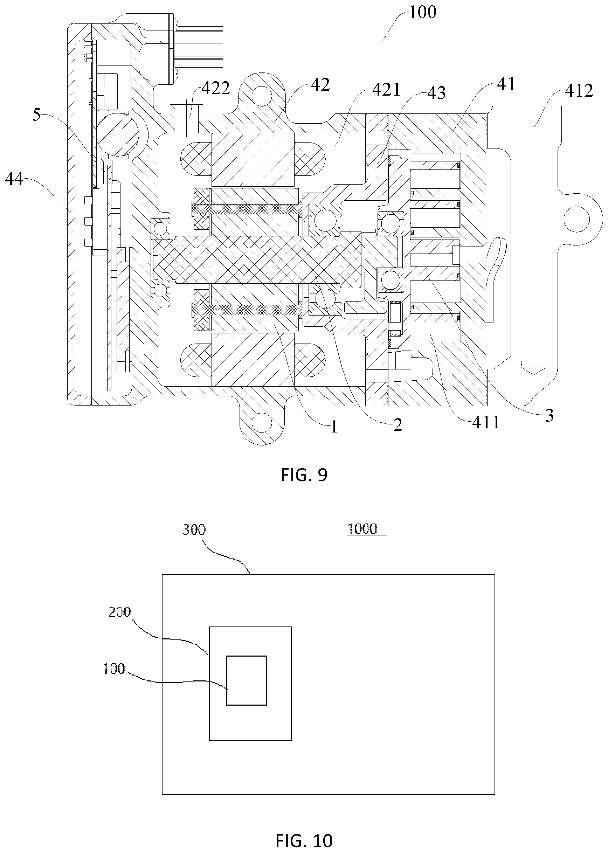

As shown in FIG. 1 and FIG. 9, the rotor assembly 1 according to the embodiments of the present disclosure comprises a rotor body 11 and at least one rotor rivet 12. The rotor assembly 1 is configured to be assembled with a stator assembly to allow the rotor assembly 1 to rotate relative to the stator assembly when a permanent magnet synchronous motor is energized for operation, thereby output a drive force to carry out air compression or other types of driving functions.

As shown in FIG. 1 to FIG. 3, the rotor body 11 comprises a rotor core 111, end plates 112, and at least one balance weight 113. A permanent magnet is embedded within the rotor core 111. In a case where the rotor core 111 has a magnet slot, the permanent magnet may be mounted within the magnet slot to be mounted and fixed to the rotor core 111. In actual mounting, the rotor core 111 is mounted in the stator assembly and sleeved over a drive shaft 2 of an electric compressor 100. In this way, when the electric compressor 100 is in operation, windings of the stator assembly are energized and generate a magnetic field that acts on the permanent magnet to drive the rotor core 111 to rotate, thereby driving the drive shaft 2 to output the drive force.

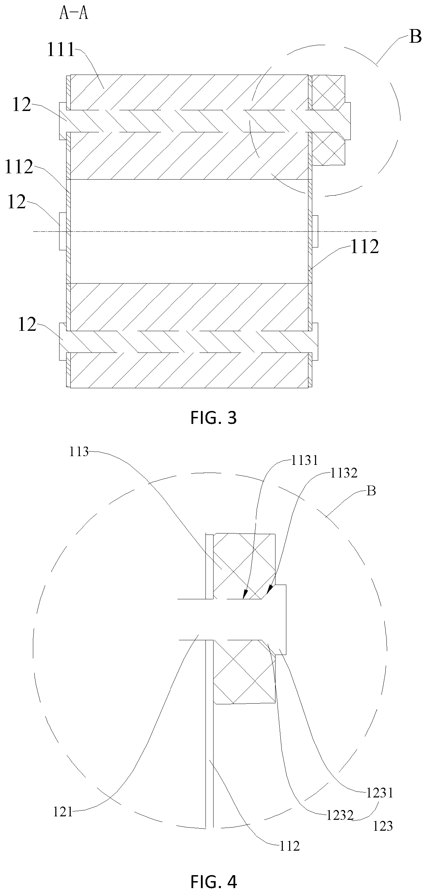

The end plates 112 are arranged at two axial ends of the rotor core 111, respectively. That is, two end plates 112 are provided, and the two end plates 112 are disposed at two ends of the rotor core 111 respectively to be attached to end surfaces of the rotor core 111. At least one balance weight 113 is disposed at a side of the at least one of the end plates 112 facing away from the rotor core 111. As shown in FIG. 3, the balance weight 113 may be disposed at one end plate 112, or the balance weight 113 may be disposed at each of two opposite side surfaces of the two end plates 112. The number of the balance weight 113 may be flexibly determined as desired.

The at least one rotor rivet 12 axially penetrates the rotor body 11 to fix the rotor body 11 into one piece. It should be noted that the rotor core 111, the end plates 112, and the balance weight 113 each of a hollow hole structure, so that the rotor rivet 12 can penetrate the rotor core 111, the end plate 112, and the balance weight 113 at the same time, allowing various parts of the rotor body 11 to be connected as a whole. In this way, relative fixing of the rotor core 111, the end plates 112, and the balance weight 113 in an axial direction of the rotor body 11 can be endured, and thus separation of the end plate 112 and the balance weight 113 from the rotor core 111 can be avoided during a rotation of the rotor core 111. Therefore, structural stability of the rotor body 11 can be improved.

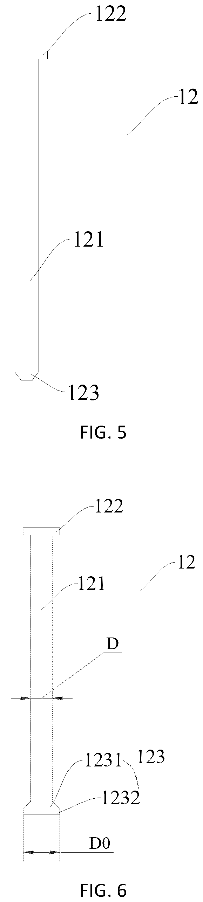

As shown in FIG. 6 to FIG. 8, the rotor rivet 12 comprises a rod portion 121, a head portion 122, and a riveting portion 123. The head portion 122 and the riveting portion 123 are located at two ends of the rod portion 121 in a length direction of the rod portion 121, respectively. As shown in FIG. 6 to FIG. 8, the head portion 122 is connected to an upper end of the rod portion 121, and the riveting portion 123 is connected to a lower end of the rod portion 121. It should be noted that the rotor rivet 12 comprises a head portion 122 and a rod portion 121 when initially formed, and after the rotor rivet 12 is riveted to the rotor body 11, the riveting portion 123 is formed through a riveting process. In this way, the head portion 122 and the riveting portion 123 can provide limit function at both ends of the rotor body 11, thereby achieving an axial limit effect on various components of the rotor body 11.

One or more of the at least one balance weight 113 is a first balance weight having a rivet hole a. The rivet hole a has a first hole segment 1131 and a second hole segment 1132. The first hole segment 1131 is configured to engage with the rod portion 121, and the second hole segment 1132 is configured to engage with the riveting portion 123. The second hole segment 1132 has an expanded hole contour relative to the first hole segment 1131, and the riveting portion 123 is at least partially filled in the second hole segment 1132.

In an exemplary embodiment of the present disclosure, the at least one balance weight 113 of the rotor body 11 in the present disclosure may comprise one balance weight, as shown in FIG. 3. In another exemplary embodiment of the present disclosure, the at least one balance weight 113 of the rotor body 11 in the present disclosure may comprise two balance weight. When the at least one balance weight 113 comprises one balance weight, the balance weight 113 may be the first balance weight. When the at least one balance weight 113 comprises two balance weights 113, one of the balance weights 113 or the two balance weights 113 may be the first balance weight.

For example, in a case where the at least one balance weight 113 comprises two balance weights 113 located at two sides of the rotor body 11 in an axial direction of the rotor body 11, when all of the rotor rivets 12 have same riveting directions, all of the riveting portions 123 may be located at one axial side of the rotor body 11, and all of the head portions 122 are located at the other axial side of the rotor body 11. In this case, the balance weight 113 at the axial side where the riveting portions 123 are disposed may be the first balance weight, and the balance weight 113 at the axial side where the head portions 122 are disposed may be a second balance weight. The second balance weight may also have a rivet hole, and the rivet hole on the second balance weight may have different contour from the rivet hole on the first balance weight.

For example, the rivet holes on the second balance weight comprise no hole segment having an expanded hole contour. When a plurality of rotor rivets 12 penetrates the rivet holes on the second balance weight, local rod portions 121 of these rotor rivets 12 are located in the rivet holes on the second balance weight, and the head portions 122 of these rotor rivets 12 are stopped at an outer end surface of the second balance weight.

It should be noted that he present disclosure is not limited in this regard. When two balance weights 113 are provided and located at two axial sides of the rotor body 11, and all of the rotor rivets 12 have different directions, allowing both the balance weights 113 to rivet the riveting portions 123 of the respective rotor rivets 12, the two balance weights 113 may both be the first balance weight.

Since the first balance weight has hole segments with two structural contours, when the mounting is carried out through riveting, the rod portion 121 may pass through the first hole segment 1131 and the second hole segment 1132. Further, when performing a riveting process, a pressure is applied to an end of the rod portion 121 facing away from the head portion 122 to form the riveting portion 123, and the riveting portion 123 is at least partially positioned in the second hole segment 1132. By designing the second hole segment 1132 with the expanded hole contour relative to the first hole segment, an inner diameter of the second hole segment 1132 may be greater than an inner diameter of the first hole segment 1131. As a result, when a part of the riveting portion 123 positioned in the second hole segment 1132 is engaged with the second hole segment 1132, a diameter of the riveting portion 123 at an engagement surface between the riveting portion 123 and the second hole segment 1132 is greater than a diameter of the rod section 121 at the engagement between the first hole segment 1131 and the rod section 121, which increases the engagement surface between the riveting portion and the second hole segment 1132, thereby improving connection stability between the rotor rivet 12 and the rotor body 11. The riveting portion 123 and the rod portion 121 are made of a same material. That is, it is not necessary for the riveting portion 123 and the rod portion 121 to be processed and formed using different materials, which is beneficial to reducing processing steps and lowering processing costs, and is conducive to large-scale production.

By at least partially positioning the riveting portion 123 in the second hole segment 1132, a connection between the riveting portion 123 and the rod portion 121 may be located in the second hole segment 1132. As a result, unlike the conventional design, the riveting portion will not completely protrude from the balance weight. In this way, molding quality of the riveting portion 123 is improved, in particular an inner peripheral wall of the second hole segment 1132 can provide supporting and reinforcing to at least part of the riveting portion 123, which is more conducive to preventing the riveting portion 123 from being broken from the rod portion 121, thereby improving structural quality of the riveting portion 123. Therefore, mounting stability of the rotor assembly 1 can be improved. In actual riveting, the riveting portion 123 may be partially positioned in the second hole segment 1132, or the riveting portion 123 may be completely positioned in the second hole segment 1132, and thus the structural design is flexible, which is convenient to adjusting a riveting depth.

It should be noted that in the related art, the riveting portions of the rotor rivets are generally located at an end plate side of the rotor body, rather than being disposed on the balance weight. For a part of the riveting portions engaged with the balance weight, their rivets need to be designed to be thicker. As a result, the riveted riveting portions completely protrude from the balance weight, or the balance weight has a lower hardness, leading to structural fatigue and a loosening of the rotor body. According to the embodiments of the present disclosure, the rivet hole a on the first balance weight is designed to comprise the first hole segment 1131 and the second hole segment 1132 to engage with the rod portion 121 and the riveting portion 123 of the rotor rivet 12, which not only is beneficial to increasing the riveting depth and preventing loosen, thereby ensuring the stability of the riveting, but also prevents the riveting portion 123 from being broken from the rod portion 121, which is conducive to improving the structural reliability of the rotor rivet 12, and prevents the riveting portion 123 from excessively protruding from the first balance weight.

In the rotor assembly 1 according to the embodiments of the present disclosure, by providing the first hole segment 1131 and the second hole segment 1132 with different hole diameters to engage with the rod portion 121 and the riveting portion 123 of the rotor rivet 12 respectively, it is beneficial to increasing the riveting depth and improving the stability of the riveting. Moreover, it can be ensured that the structure of the riveting portion 123 can be effectively supported by the outer peripheral wall of the second hole segment 1132, and the riveting portion 123 is prevented from being broken from the rod portion 121. Therefore, structural safety of the rotor rivet 12 can be improved, thereby improving the reliability of the rotor assembly 1.

In the rotor assembly 1 according to the embodiments of the present disclosure, the riveting process can be improved by optimizing an engagement arrangement between the rotor rivet 12 and the balance weight 113. In addition, when the rotor rivet 12 is engaged with the balance weight at an extreme temperature, the riveting portion 123 of the rotor rivet 12 cannot be broken in structure. In this way, the structural stability of the rotor rivet 12 can be improved, thereby improving the safety and the reliability of the rotor assembly 1 and the permanent magnet synchronous motor having same.

In addition, in some solutions of the related art, a material of the balance weight engaging with the riveting portion of the rivet is a softer material than that of the rivet to prevent fatigue dents at a contact surface between the riveting portion and the balance weight during the riveting process and a decrease in the tightening strength, thereby solving the problem of riveting failure. However, the use of softer materials such as brass at the riveting position would reduce design freedom and increase the cost. In other solutions, a material harder than the material of the rivet is interposed between the head portion of the rivet and the balance weight to prevent the head portion of the rivet from denting due to fatigue, thereby maintaining fastening strength. However, since the material harder than the material of the rivet is interposed between the head portion of the rivet and the balance weight, the riveting process and production process is more complicated, and thus has room for improvement. In the rotor assembly 1 according to the embodiments of the present disclosure, by adopting the above technical solution, the above technical problems can be effectively avoided without altering the hardness of the material.

In some embodiments, as shown in FIG. 4, the second hole segment 1132 has a cross-sectional area gradually increasing in a direction away from the first hole segment 1131. For example, the first hole segment 1131 and the second hole segment 1132 each have a circular hole structure, and the first hole segment 1131 has a hole structure with a constant cross-sectional area and the second hole segment 1132 has a hole structure with a variable cross-section. That is, the inner diameter of the first hole segment 1131 at each position in the length direction remains constant, and the inner diameter of the second hole segment 1132 at each position in the length direction gradually changes.

As shown in FIG. 4, the second hole segment 1132 is connected to a right side of the first hole segment 1131. Further, the first hole segment 1131 penetrates a left end surface of the first balance weight, and the second hole segment 1132 penetrates a right end surface of the first balance weight. The cross-sectional area of the second hole segment 1132 gradually increases from left to right to form a flared structure on the right side of the first hole segment 1131.

Further, as shown in FIG. 4, the cross-sectional area of the second hole segment 1132 increases linearly. That is, the second hole segment 1132 is constructed into a horizontal funnel-shaped structure. In this way, after the rotor rivet 12 passes through the first hole segment 1131 and the second hole segment 1132, a pressure can be applied to the rotor rivet 12 to form the riveting portion 123 at the end of the rod portion 121. In addition, during the riveting and engaging between the riveting portion 123 and the second hole segment 1132, the riveting portion 123 is formed into a structure matching with the second hole segment 1132. For example, the riveting portion 123 may be also pressed into a horizontal funnel structure.

Therefore, there is a larger engagement surface between the riveting portion 123 and the second hole segment 1132, in particular there is a larger cross-sectional area than an engagement surface between the first hole segment 1131 and the rod portion 121. As a result, the riveting portion 123 can be closely engaged with the second hole segment 1132, which is beneficial to improving the riveting effect between the riveting portion 123 and the first balance weight. In addition, with a support provided by the inner peripheral wall of the second hole segment 1132 and the riveting portion 123, a breakage risk of the riveting portion 123 from the rod portion 121 can be greatly reduced, thereby improving the reliability of the rotor rivet 12.

In some embodiments, the second hole segment 1132 is fully filled with the riveting portion 123. That is, a length of the riveting portion 123 in the axial direction of the rotor rivet 12 is greater than or equal to a depth of the second hole segment 1132 in a thickness direction of the first balance weight.

When the length of the riveting portion 123 in the axial direction of the rotor rivet 12 is equal to the depth of the second hole segment 1132 in the thickness direction of the first balance weight, the riveting portion 123 can be completely extended into the second hole segment 1132, and an outer surface of the riveting portion 123 is flush with an outer surface of the first balance weight, thereby forming an embedded structure of the riveting portion 123 in the second hole segment. 1132. In this way, when the electric compressor 100 is in operation, the riveting portion 123 will not protrude from the first balance weight, thereby avoiding impact due to a contact of the riveting portion 123 with a structure outside the first balance weight, which is beneficial to improving the safety of the riveting portion 123. Meanwhile, the outer peripheral wall of the first balance weight is relatively flat, and thus will not result in an obtrusive structural.

In another embodiment, the length of the riveting portion 123 may be greater than the depth of the second hole segment 1132, as shown in FIG. 4. A left end part of the riveting portion 123 connected to the rod portion 121 is located in the second hole segment 1132, and a right end part of the riveting portion 123 is located outside the second hole segment 1132. It should be noted that a part of the riveting portion 123 protruding from the second hole segment 1132 may be served as a reserved segment. In this way, during a spin riveting process, a spin rivet head will not be in contact with the first balance weight, or the reserved segment will protrude from the second hole segment 1132. As a result, when the rotor assembly 1 is used for a long time and a large gap is formed between the riveting portion 123 and the inner peripheral wall of the second hole segment 1132, the rotor assembly 1 may be riveted again, which allows the reserved section to be further riveted, thereby filling the gap between the riveting portion 123 and the second hole segment 1132. Therefore, the stability of the riveting can be improved.

In some embodiments, the riveting portion 123 comprises a sunk section 1231 and an exposed section 1232. The sunk section 1231 is located in the second hole segment 1132, and the exposed section 1232 is located on a surface of the first balance weight. The sunk section 1231 and the exposed section 1232 are formed through the spin riveting process of the rotor rivet 12. For example, after the rod portion 121 passes through the first hole segment 1131 and the second hole segment 1132, one end of the rod portion 121 facing away from the head portion 122 may be subjected to the spin rivet process. As a result, the end of the rod portion 121 forms the sunk section 1231 in the second hole segment 1132 first. With a further processing of the spin rivet head, the rod portion 121 forms the exposed section 1232 on the surface of the first balance weight, and the exposed section 1232 is suitable for be pressed against the surface of the first balance weight. As shown in FIG. 6 to FIG. 8, in actual processing, the exposed section 1232 may be processed into different shapes.

Therefore, after processing one end of the rod portion 121 through the spin rivet head, the sunk section 1231 may be tightly pressed against and attached with the inner peripheral wall of the second hole portion 1132 in the second hole portion 1132, which is beneficial to improving the engagement between the riveting portion 123 and the second hole segment 1132. Meanwhile, the exposed section 1232 and the surface of the first balance weight also form a tight press-fit structure, increasing the engagement between the riveting portion 123 and the surface of the first balance weight, thereby improving the engagement stability between the first balance weight and the riveting portion 123.

It should be noted that after the rotor rivet 12 is engaged with the rotor body 11 in a position limited manner, on one side of the first balance weight, the rotor rivet 12 can not only be limited with the inner peripheral wall of the second hole segment 1132 by the sunk section 1231, but also be limited with the surface of the first balance weight by the exposed section 1232. That is, a dual engagement is formed between the riveting portion 123 and the first balance weight, which is beneficial to improving the limit stability between the riveting portion 123 and the first balance weight, thereby improve the riveting reliability.

In some embodiments, as shown in FIG. 6 to FIG. 8, the rod portion 121 has a diameter of D, and the riveting portion 123 has a maximum diameter of D0, where 1.2D≤D0≤2D. That is, the maximum diameter of the riveting portion 123 is greater than 1.2 times the diameter of the rod portion 121 and less than 2 times the diameter of the rod portion 121. For example, D0 may be 1.4D, 1.6D, or 1.7D.

By designing the structural dimensions of the riveting portion 123 and the structural dimensions of the rod portion 121 within the above-mentioned dimension range, there is a greater engagement depth between the riveting portion 123 and the second hole segment 1132, thereby improving the riveting stability and ensuring the riveting quality of the rotor rivet 12. Further, a radial dimension of the riveting portion 123 will not be too large, and thus the riveting portion 123 will not protrude too much from the second hole segment 1132. Therefore, the material can be saved, and other quality problem due to the protruding of the riveted riveting portion 123 from the rotor core 111 in a radial direction of the rotor core 111 can be avoided, thereby improving the rationality of the structural design.

Therefore, the arrangement of the riveting portion 123 may take into account the riveting quality and material saving at the same time.

In some embodiments, the rotor body 11 has A magnetic poles, and the at least one rotor rivet comprises B rotor rivets 12, where B≤A-2. That is, the number of the rotor rivets 12 is less than or equal to a difference value of the number of the magnetic poles of the rotor body 11 and the numerical value 2. When the rotor body 11 has 8 magnetic poles, the number of the rotor rivets 12 is 6 or 4.

Therefore, in the present disclosure, by connecting and engaging the riveting portion 123 of the rotor rivet 12 with the first balance weight, the number of the rotor rivets 12 can be reduced to the greatest extent while ensuring the riveting quality, thereby reducing arrangement cost of the rotor rivets 12, lowering the material costs, and reducing the processing technology costs. In some other embodiments, the number of the rotor rivets 12 cannot be set too small, such as one. That is, it is necessary to ensure that the rotor assembly 1 can be effectively limited and fixed by the rotor rivets 12 at several different positions in the circumferential direction.

In some embodiments, as shown in FIG. 2, the rotor core 111 has an outer radius of R.A cylindrical surface that is coaxial with the rotor core 111 and passes through the central axis of the rotor rivet 12 has a diameter of r (or, in other words, r is a distance between the central axis of the rod portion and the central axis of the rotor core), where 0.4<r/R<0.9. For example, r/R may be 0.6, 0.7 or 0.8. By reasonably designing a hole structure on the rotor core 111 for passing of the rotor rivet 12, the position of the rotor rivet 12 on the rotor core 111 may far away from the outer peripheral wall of the rotor core 111, thereby maintaining enough safe distance.

It should be noted that in the related art, when the rotor rivet 12 is mounted, the distance between the hole structure on the rotor core 111 for passing of the rotor rivet 12 and the outer peripheral wall of the rotor core 111 is small, resulting in a smaller structural strength of the outer peripheral wall of the rotor core 111 at a position corresponding to the rotor rivet 12. That is, when the rotor core 111 is used for a long time and rotates frequently at high rotational speed, the rotor rivet 12 will have a greater impact on the hole structure of the rotor iron core 111, thereby resulting in structural damage to the rotor core 111. In the present disclosure, by setting the ratio of r/R within the above range, crack of the outer peripheral wall of the rotor core 111 can be effectively avoided, improving the structural stability of the rotor core 111 and ensuring the riveting quality.

In some embodiments, the rod portion 121 has a diameter of D ranging from 3 mm to 6 mm. For example, the diameter of the rod portion 121 is 4 mm or 5 mm. It should be noted that the rod portion 121 is configured to engage with the rivet hole a, and a gap between the rod portion 121 and the inner wall of the rivet hole a ranges from 0.1mm to 0.2 mm. That is, the diameter of the rivet hole a changes with the diameter of the rod portion 121, allowing the rivet hole a and the rod portion 121 to be engage with each other within a reasonable engagement gap range.

In some embodiments, the at least one rotor rivet comprises a plurality of rotor rivets 12. The plurality of rotor rivets 12 is arranged at intervals in a circumferential direction of the rotor core 111, allowing the rotor core 111 and the end plate 112 to be connected and fixed to each other by the rotor rivets 12 at several positions in the circumferential direction, thereby greatly improving the structural stability and the reliability of the rotor body 11.

The plurality of rotor rivets 12 may be evenly distributed at intervals in the circumferential direction of the rotor iron core 111. For example, when four rotor cores 111 are provided and the four rotor rivets 12 are evenly distributed at intervals in the circumferential direction of the rotor iron core 111, i.e., a circumferential angle between two adjacent rotor rivets 12 is 90°. Therefore, mounting forces of the four rotor rivets 12 on various components of the rotor body 11 in the circumferential direction will be more balanced, and a too small or too large local connection force can be avoided.

In some embodiments, the riveting portions 123 of the plurality of rotor rivets 12 are located at one side of the rotor core 111 in an axial direction of the rotor core 111. That is to say, when the plurality of rotor rivets 12 are connected and engaged with the rotor body 11, the plurality of rotor rivets 12 may be mounted at one side of the rotor core 111 in the axial direction of the rotor core 111, allowing the head portions 122 of the plurality of rotor rivets 12 to be located at a first side of the rotor core 111 and the riveting portions 123 of the plurality of rotor rivets 12 to be located at a second side of the rotor core 111. As shown in FIG. 3, the head portions 122 of the plurality of rotor rivets 12 are located at a left end surface of the rotor core 111, and the riveting portions 123 of each of the plurality of rotor rivets 12 are located at a right end surface of the rotor core 111.

It should be noted that after the rotor rivets 12 penetrate the rotor core 111, a spin riveting process needs to be carried out. Therefore, the plurality of rotor rivets 12 are mounted at one side of the rotor core 111. In this way, when an operator perform riveting on the rotor rivets 12, the plurality of rotor rivets 12 can be simultaneously riveted at one side of the rotor core 111 after all of the plurality of rotor rivets 12 penetrate the rotor core 111. That is, when performing riveting on different rotor rivets 12, there is no need to replace or adjust the position of the riveting heads, which greatly improves the riveting efficiency and the assembly efficiency of the rotor assembly 1.

In some embodiments, the first balance weight has a radial width of W greater than 2D, where D is the diameter of the rod portion 121. That is, the radial width of the first balance weight is greater than twice the diameter of the rod portion 121. Therefore, when the first balance weight is engaged with the rod portion 121, a pin hole needs to be formed at the first balance weight, and the gap between the rod portion 121 and the inner wall of the rivet hole a ranges from 0.1mm to 0.2mm. Therefore, by setting the radial width of the first balance weight within the above range, it is possible to prevent the pin hole from occupying too much space on the first balance weight, thereby avoiding the impact on the structural strength of the first balance weight, and ensuring the structural stability of the first balance weight.

Therefore, after the rotor rivets 12 penetrate the first balance weight, the rotor rivets 12 will not greatly affect the structural state of the first balance weight during the spin riveting forming process of the riveting portion 123. That is, the first balance weight will not have an obvious structural fracture problem.

In some embodiments, one of the end plates 112 sandwiched between the first balance weight and the rotor core 111 has a thickness greater than or equal to 0.8 mm. That is, in actual setting, the end plate 112 located between the first balance weight and the rotor core 111 is designed to have a thickness of at least 0.8 mm, such as 1 mm, or 1.1 mm.

By setting the thickness of the end plate 112 within the above range, the structural strength of the end plate 112 itself can be effectively ensured, thereby avoiding serious deformation of the end plate 112 during the riveting process of the rotor rivet 12. Therefore, the riveting quality can be ensured, and it is beneficial to reducing natural frequency dispersion of the rotor assembly 1. In some other embodiments, the thickness of the end plate 112 should not be set too large, and the thickness of the end plate 112 needs to be set within a reasonable cost range.

In some embodiments, one of the end plates 112 sandwiched between the first balance weight and the rotor core 111 has a thickness greater than or equal to 0.8 mm. That is, in actual setting, the end plate 112 located between the first balance weight and the rotor core 111 is designed to have a thickness of at least 0.8 mm, such as 1 mm, or 1.1 mm.

By setting the thickness of the end plate 112 within the above range, the structural strength of the end plate 112 itself can be effectively ensured, thereby avoiding serious deformation of the end plate 112 during the riveting process of the rotor rivet 12. Therefore, the riveting quality can be ensured, and it is beneficial to reducing natural frequency dispersion of the rotor assembly 1. In some other embodiments, the thickness of the end plate 112 should not be set too large, and the thickness of the end plate 112 needs to be set within a reasonable cost range.

In some embodiments, the riveting portion 123 has a volume greater than or equal to a volume of the head portion 122. In this way, structural strength and torsional shear resistance of the riveting portion 123 are greater, which is not only conducive to riveting molding, but also not easy for the riveting portion 123 to be broken or structurally deformed when the riveting portion 123 is riveted to the first balance weight, thereby improving the structural safety of the rotor rivet 12.

In this way, when the riveting portion 123 is pressed against a side of the first balance weight for limiting, the riveting portion 123 can provide good position limit, and the riveting portion 123 would not be separated from the first balance weight, thereby improving reliability of riveting limit.

And/or, in other embodiments, the riveting portion 123 has a diameter greater than or equal to a diameter of the head portion 122. That is, a cross-sectional area of the riveting portion 123 is greater than a cross-sectional area of the head portion 122. Similarly, the torsional shear resistance of the riveting portion 123 can also be increased. That is, torsional resistance can be enhanced, thereby preventing the riveting portion 123 from being broken from the rod portion 121 during the rotation of the rotor assembly 1. Therefore, the safety of the structural design can be improved. Moreover, since the diameter of the riveting portion 123 is greater than the diameter of the head portion 122, the riveting portion 123 has a larger limit surface than the head portion 122, and thus has better limit effect.

It should be noted that after the rotor rivets 12 penetrate the rotor body 11, as the electric compressor 100 further increases its rotational speed, the riveting portion 123 is subjected to a maximum force at this time. In the present disclosure, the volume and/or diameter of the riveting portion 123 is set to be greater than that of the head portion 122, allowing the riveting portion 123 not to be easily broken under a greater force. When the spin riveting process is used, the requirements for the riveting quality of the riveting portion 123 are also lower, which is more conducive to reducing a spinning and riveting device as well as the processing cost.

In some embodiments, the rotor rivet 12 has a hardness ranging from HRB50 to HRB200. For example, the hardness of the rotor rivet 12 is HRB70 or HRB70150. By setting the hardness of the rotor rivet 12 within the above-mentioned range, too small hardness can be avoided, the riveting effect of the rotor rivet 12 on the rotor assembly 1 can be ensured. In this way, the riveting quality can improved, and serious deformation of the head portion 122 during the riveting process can be avoided. In addition, excessive hardness can be avoided, which is conducive to reducing riveting time of the rotor rivet 12 during the riveting process, thereby improving riveting efficiency.

Embodiments of the present disclosure further provide a permanent magnet synchronous motor.

The permanent magnet synchronous motor according to the embodiments of the present disclosure comprises a stator assembly and a rotor assembly 1 rotatable relative to the stator assembly. The rotor assembly 1 is the rotor assembly 1 according to any one of the above-mentioned embodiments. The stator assembly comprises a stator core and windings. The rotor assembly 1 is disposed inside the stator core, and is rotatable in the stator core.

In the permanent magnet synchronous motor, by arranging the rotor assembly 1 according to the above-mentioned embodiment, the first hole segment 1131 and the second hole segment 1132 of different hole diameters can be engaged with the rod portion 121 and the riveting portion 123 of the rotor rivet 12 respectively, which is conducive to increasing the riveting depth and improving riveting stability. In addition, it can be ensured that the riveting portion 123 is effectively supported by the outer peripheral wall of the second hole segment 1132, and the riveting portion 123 can be prevented from being broken from the rod portion 121. As a result, the structural safety of the rotor rivet 12 can be improved, and the reliability of the rotor assembly 1 can be improved. Therefore, the operation stability of the permanent magnet synchronous motor can be ensured.

Embodiments of the present disclosure further provide an electric compressor 100.

In the electric compressor 100 according to the embodiments of the present disclosure, as shown in FIG. 9, the electric compressor 100 comprises a compression component 3 and a drive component. The drive component is configured to drive the compression component 3 to perform a compression operation, and the drive component comprises the permanent magnet synchronous motor according to the above-mentioned embodiments. The compression component 3 and the drive component are both arranged in a housing component of the electric compressor 100. The housing component comprises a high-pressure housing 41, a low-pressure housing 42, and a support 43 mounted between the high-pressure housing 41 and the low-pressure housing 42.

As shown in FIG. 9, the low-pressure housing 42 is mounted at a left side of the support 43, and a low-pressure chamber 421 for the drive component is defined by the the low-pressure housing 42 and the support 43. The low-pressure housing 42 has a refrigerant inlet 422. The high-pressure housing 41 is mounted at a right side of the support 43, and a high-pressure chamber 411 for mounting the compression component 3 is defined by the high-pressure housing 41 and the support 43. The high-pressure housing 41 has a refrigerant outlet 412. When the electric compressor 100 is in operation, a low-pressure refrigerant enters the low-pressure chamber 421 from the refrigerant inlet 422 on the low-pressure housing 42 and passes through the support 43 to enter the compression component 3 to be compressed. The compressed high-pressure refrigerant is discharged into the high-pressure chamber. 411, and then is discharged out of the electric compressor 100 from the refrigerant outlet 412 of the high-pressure housing 41. As shown in FIG. 9, a cover plate 44 is connected to a side of the low-voltage housing 42 facing away from the high-voltage housing 41. A mounting space is defined between the cover plate 44 and the low-voltage housing 42. The electronic control component 5 is provided in the mounting space, and the electronic control component 5 is configured to control an operation state of the permanent magnet synchronous motor.

In the electric compressor 100, by arranging the permanent magnet synchronous motor according to the above-mentioned embodiments, the electric compressor 100 has a stable operation state, and it is ensured that the drive component can accurately and reliably drive the compression component 3 to operate, thereby achieving stable output of the high-pressure refrigerant.

Embodiments of the present disclosure further provide an air conditioning system 200.

In the air conditioning system 200 according to the embodiments of the present disclosure, as shown in FIG. 10, the air conditioning system 200 is provided with the electric compressor 100 according to the above-mentioned embodiments. During an operation of the electric compressor 100, it is not easy for the electric compressor 100 to stop its operation due to the failure of the rotor assembly 1. By providing the electric compressor 100, the air conditioning system 200 has more stable heat exchange function, and a temperature state in the space can be accurately and timely adjusted by the air conditioning system 200.

Embodiments of the present disclosure further provide a vehicle 1000.

In the vehicle 1000 according to the embodiments of the present disclosure, as shown in FIG. 10, the vehicle 1000 comprises a vehicle body 300 and an air conditioning system 200 mounted on the vehicle body. The air conditioning system 200 of the vehicle is the air conditioning system 200 in the above-mentioned embodiments. By providing the above-mentioned air-conditioning system 200 to perform airflow heat exchange on an internal space of the vehicle body 300, a space temperature within the vehicle body 300 can accurately meet temperature requirements of users, thereby improving riding experience of the users.

A rotor assembly 1 according to some embodiments of the present disclosure will be described below with reference to the accompanying drawings.

As shown in FIG. 1, FIG. 2, and FIG. 11 to FIG. 13, the rotor assembly 1 according to the embodiments of the present disclosure comprises a rotor body 11 and at least one rotor rivet 12. The rotor assembly 1 is configured to be assembled with a stator assembly to allow the rotor assembly 1 to rotate relative to the stator assembly when a permanent magnet synchronous motor is energized for operation, thereby output a drive force to carry out air compression or other types of driving functions.

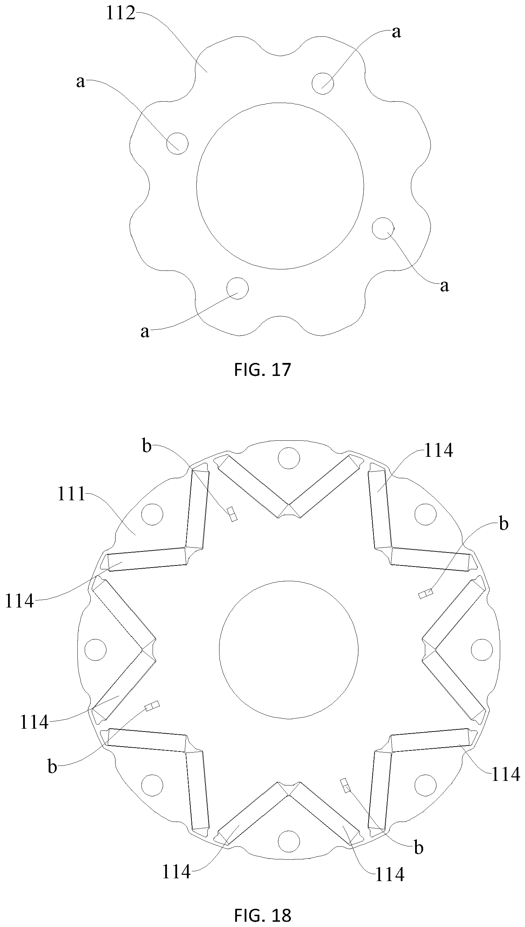

As shown in FIG. 1, FIG.2 and FIG. 11, the rotor body 11 comprises a rotor core 111, end plates 112, and at least one balance weight 113. A permanent magnet is embedded within the rotor core 111. In a case where the rotor core 111 has a magnet slot, the permanent magnet may be mounted within the magnet slot to be mounted and fixed to the rotor core 111. In actual mounting, the rotor core 111 is mounted in the stator assembly and sleeved over a drive shaft 2 of an electric compressor 100. In this way, when the electric compressor 100 is in operation, windings of the stator assembly are energized and generate a magnetic field that acts on the permanent magnet to drive the rotor core 111 to rotate, thereby driving the drive shaft 2 to output the drive force. It should be noted that the rotor core 111 is a laminated structure of silicon steel sheets, and riveting sites b need to be provided on the core to perform form-locking between the laminations. The locking positions are evenly distributed in a circumferential direction of the rotor core 111, such as a region close to a center part in a radial direction of the rotor. As shown in FIG. 18, a region enclosed by dotted lines is a distribution region of the riveting sites b. 4 or 8 riveting sites b may be provided. Due to a gap between the riveting sites b, 2 riveting sites b cannot realize complete position fixing on one plane. At least 3 riveting sites b are needed, and 4 riveting sites optimal number is 4. The final arrangement of the riveting sites b is as shown in FIG. 18.

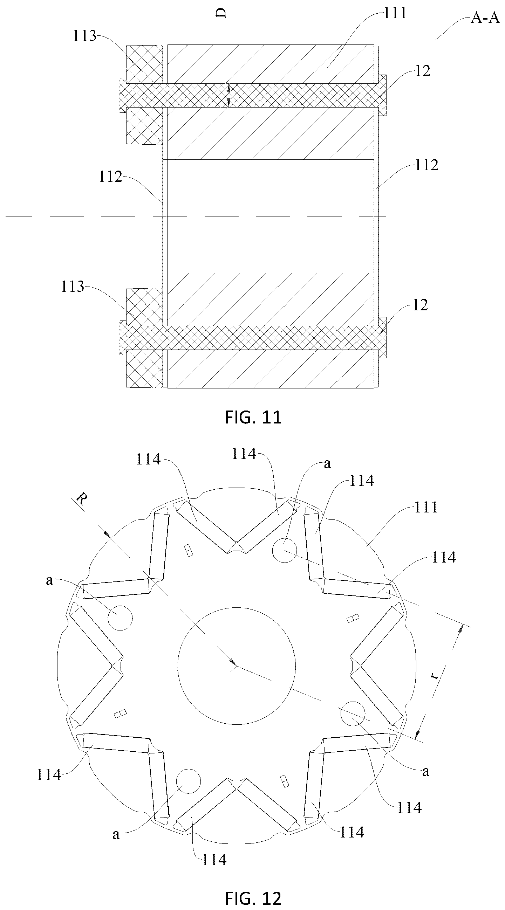

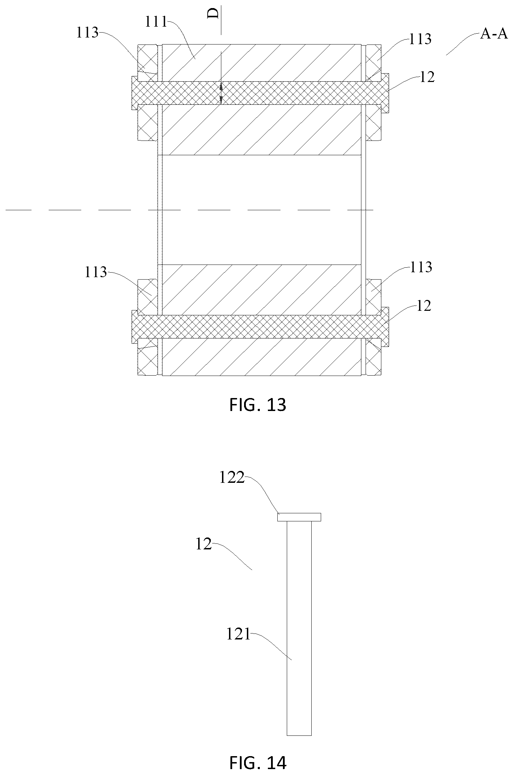

The end plates 112 are arranged at two axial ends of the rotor core 111, respectively. That is, two end plates 112 are provided, and the two end plates 112 are disposed at two ends of the rotor core 111 respectively to be attached to end surfaces of the rotor core 111. At least one balance weight 113 is disposed at a side of the at least one of the end plates 112 facing away from the rotor core 111. As shown in FIG. 11, the balance weight 113 may be disposed at one end plate 112; or as shown in FIG. 13, the balance weight 113 may be disposed at each of two opposite side surfaces of the two end plates 112. The number of the balance weight 113 may be flexibly determined as desired.

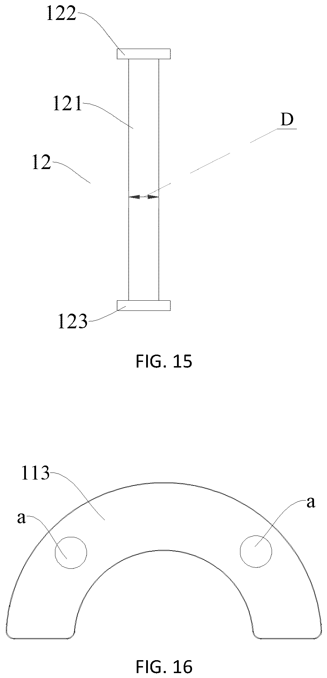

The at least one rotor rivet 12 axially penetrates the rotor body 11 to fix the rotor body 11 into one piece. It should be noted that the rotor core 111, as shown in FIG. 9 and FIG. 16, the end plates 112, and the balance weight 113 each of a hollow hole structure, so that the rotor rivet 12 can penetrate the rotor core 111, the end plate 112, and the balance weight 113 at the same time, allowing various parts of the rotor body 11 to be connected as a whole. In this way, relative fixing of the rotor core 111, the end plates 112, and the balance weight 113 in an axial direction of the rotor body 11 can be endured, and thus separation of the end plate 112 and the balance weight 113 from the rotor core 111 can be avoided during a rotation of the rotor core 111. Therefore, structural stability of the rotor body 11 can be improved.

As shown in FIG. 15, the rotor rivet 12 comprises a rod portion 121, a head portion 122, and a riveting portion 123. The head portion 122 and the riveting portion 123 are located at two ends of the rod portion 121 in a length direction of the rod portion 121, respectively. As shown in FIG. 6 to FIG. 8, the head portion 122 is connected to an upper end of the rod portion 121, and the riveting portion 123 is connected to a lower end of the rod portion 121. It should be noted that the rotor rivet 12 comprises a head portion 122 and a rod portion 121 when initially formed, and after the rotor rivet 12 is riveted to the rotor body 11, the riveting portion 123 is formed through a riveting process. In this way, the head portion 122 and the riveting portion 123 can provide limit function at both ends of the rotor body 11, thereby achieving an axial limit effect on various components of the rotor body 11. Therefore, by allowing the rotor rivet 12 to penetrate the rotor body 11, each structural components of the rotor body 11 can be fixedly mounted between the head portion 122 and the riveting portion 123 of the rotor rivet 12, preventing the rotor body 11, the end plate 112, and the balance weight 113 from being separated from each other in the axial direction of the rotor body 11.

The riveting portion 123 is of an imperforate solid structure. That is, the riveting portion 123 in the present disclosure has no hollow region, and thus the riveting portion 123 has a greater overall structural strength. In this way, twisting and deformation in the hollow region of the riveting portion 123 can be avoided, thereby improving the structural stability of the rotor rivet 12 can be improved, and the riveting quality can be ensured.

The rotor rivet 12 has a tensile strength τ satisfying 0.2·τ≤M·r· π·(n/D)²/225≤0.7·τ, where r represents a distance between a central axis of the rod portion 121 and a central axis of the rotor core 111, M is a mass of the balance weight 113, n is a maximum rotational speed of the rotor assembly 1, and D is a diameter of the rod portion 121. It should be noted that M·r·π·(n/D)²/225 is a shear stress subjected by the rotor rivet 12 after being mounted on the rotor body 11. By setting relationship between the shear stress and the tensile strength of the rotor rivet 12, the shear stress can be controlled within the range of 0.2 times to 0.7 times of the tensile strength, such as 0.4 times or 0.6 times of the tensile strength. In this way, after the rotor rivet 12 penetrates each structural parts of the rotor body 11, even if the rotor assembly 1 maintains a high speed during the operation of the electric compressor 100, the rotor rivets 12 can still maintain a good structural condition. That is, structural breakage of the rotor rivet 12 is not easy to occur, thereby satisfying the use requirements.

Therefore, by setting the shear stress of the rotor rivet 12 and the tensile strength of the rotor rivet 12 within the above range, the position of the balance weight 113 cannot easily change, thereby avoiding an increase in an unbalance amount under high-speed operating conditions and reducing vibration noise. In addition, when the electric compressor 100 is in operation at a high rotational speed for a long time, tangential forces and axial forces of the rotor rivet 12 meet the safety requirements, and the rotor rivet 12 is not easy to fail. In this way, the volume of the balance weight 113 on the rotor can be as compact as possible while the mass of the balance weight 113 satisfies the weight requirements. Further, the rotor core 111, the balance weight 113, and the end plate 112 each have rivet holes a for accommodating the rotor rivets 12, allowing the components of the rotor body 11 to be assembled together simply and reliably. Further, the arrangement of rivets has less impact on performance of a magnetic circuit of the motor.

In the rotor assembly 1 according to the embodiments of the present disclosure, by setting the relationship between cooperation parameters of various structural components of the rotor body 11 and tensile strength of the rotor rivet 12, layout performance of the rotor assembly 1 can be greatly optimized, and the structural strength of the rotor rivet 12 in use can be ensured. Therefore, a problem of the rotor rivets 12 being prone to be broken can be easily avoided. As a result, the rotor assembly 1 has a more compact and reliable structure, thereby ensuring riveting quality.

In this embodiment, the rotor assembly 1 optimizes the relationship between each structural component and the tensile strength of the rotor rivets 12 to ensure the riveting quality among the rotor rivet 12, the rotor core 111, and the balance weight after the rotor rivet 12 penetrates the rotor core 111. As a result, each component of the rotor body 11 can be stably connected. In this way, when the electric compressor 100 has a large cooling output demand and the rotor core 111 rotates at the high speed, the riveting portion 123 can still maintain a good structural condition. Therefore, it can be ensured that the electric compressor 100 has stable and large cooling output, and the operation stability of the electric compressor 100 can be improved.

In some embodiments, two balance weights 113 of different masses are arranged at two sides of the rotor body 11, respectively, and the heavier balance weight of the two balance weights 113 has a mass of M. That is, M in the 0.2·τ≤M·r·π·(n/D)²/225≤0.7·τ is the mass of the heavier balance weight in the two balance weights 113. Therefore, the structural strength of the rotor rivet 12 in use can be better ensured, and the problem of the rotor rivet 12 being prone to be broken can be better avoided.

In some embodiments, the rotor body 11 has A magnetic poles 114, and the at least one rotor rivet comprises B rotor rivets 12, where B≤A. That is, the number of the rotor rivets 12 is less than or equal to the number of the magnetic poles 114 of the rotor body 11. For example, when the rotor body 11 has 8 magnetic poles 114, the number of the rotor rivets 12 is 8, 6 or 4.

Therefore, in the present disclosure, by connecting and engaging the rotor rivets 12 with the rotor body 11, the number of the rotor rivets 12 can be reduced to the greatest extent while ensuring the riveting quality, thereby reducing arrangement cost of the rotor rivets 12, lowering the material costs, and reducing the processing technology costs. In some other embodiments, the number of the rotor rivets 12 cannot be set too small, such as one. That is, it is necessary to ensure that the rotor assembly 1 can be effectively limited and fixed by the rotor rivets 12 at several different positions in the circumferential direction.

In a further embodiment, B≤A-2. That is, the number of the rotor rivets 12 is less than or equal to a difference value of the number of the magnetic poles 114 of the rotor body 11 and the numerical value 2. When the rotor body 11 has 8 magnetic poles 114, the number of the rotor rivets 12 is 6 or 4. In this way, after the rotor rivets 12 are engaged with the rotor body 11, the number of the rotor rivets 12 can not only ensure the riveting quality, but also help reduce the arrangement cost of the rotor rivets 12.

In some embodiments, the rotor rivets 12 are disposed between two adjacent magnetic poles 114 of the rotor body 11. As a result, the arrangement of the rotor rivets 12 will not affect the magnetic poles 114 of the rotor body 11, and thus the rationality of the structural arrangement can be improved.

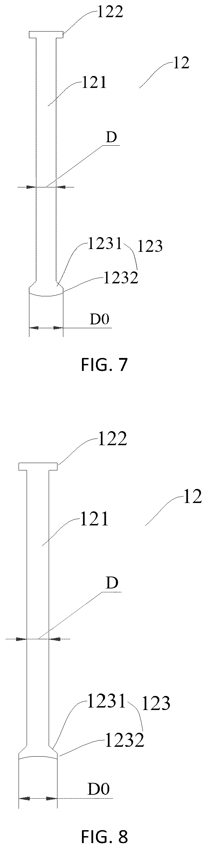

In a further embodiment, the at least one rotor rivet comprises a plurality of rotor rivets 12 arranged at intervals in a circumferential direction of the rotor core 111. As shown in FIG. 12, 8 magnetic poles 114 of the rotor body 11 are provided, and 4 rotor rivets 12 are provided. That is, the number of the rotor rivets 12 is less than the number of the magnetic poles 114 of the rotor body 11. In actual arrangement, 8 magnetic poles 114 may be evenly distributed at intervals in the circumferential direction of the rotor body 11. Meanwhile, 4 rotor rivets 12 may also be evenly distributed at intervals in the circumferential direction of the rotor body 11. That is, a circumferential angle between two adjacent rotor rivets 12 is 90°. Therefore, mounting forces of the four rotor rivets 12 on various components of the rotor body 11 in the circumferential direction will be more balanced, and a too small or too large local connection force can be avoided.

As shown in FIG. 12, 4 rotor rivets 12 are evenly distributed at intervals between the 8 magnetic poles 114, and magnet slots of the rotor core 111 are distributed in a general "V" shape. In this way, the magnetic poles 114 of the rotor body 11 can be evenly distributed in the circumferential direction, and the number of the rotor rivets 12 is also set relatively evenly to balance the drive force of the rotor body 11 at various positions in the circumferential direction and balance the riveting effect.

Moreover, the riveting portions 123 of the plurality of rotor rivets 12 are located at one side of the rotor core 111 in an axial direction of the rotor core 111. That is, when the plurality of rotor rivets 12 are connected and engaged with the rotor body 11, the plurality of rotor rivets 12 may be mounted at one side of the rotor core 111 in the axial direction of the rotor core 111, allowing the head portions 122 of the plurality of rotor rivets 12 to be located at a first side of the rotor core 111 and the riveting portions 123 of the plurality of rotor rivets 12 to be located at a second side of the rotor core 111. As shown in FIG. 11, the head portions 122 of the plurality of rotor rivets 12 are located at a left end surface of the rotor core 111, and the riveting portions 123 of the plurality of rotor rivets 12 are located at a right end surface of the rotor core 111.

It should be noted that after the rotor rivets 12 penetrate the rotor core 111, a spin riveting process needs to be carried out. Therefore, the plurality of rotor rivets 12 are mounted at one side of the rotor core 111. In this way, when an operator perform riveting on the rotor rivets 12, the plurality of rotor rivets 12 can be simultaneously riveted at one side of the rotor core 111 after all of the plurality of rotor rivets 12 penetrate the rotor core 111. That is, when performing riveting on different rotor rivets 12, there is no need to replace or adjust the position of the riveting heads, which greatly improves the riveting efficiency and the assembly efficiency of the rotor assembly 1.

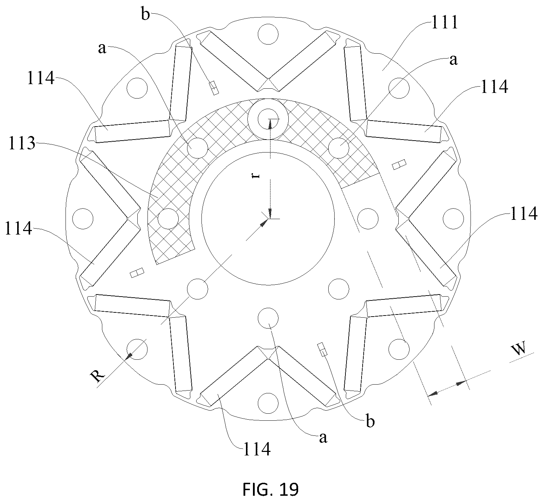

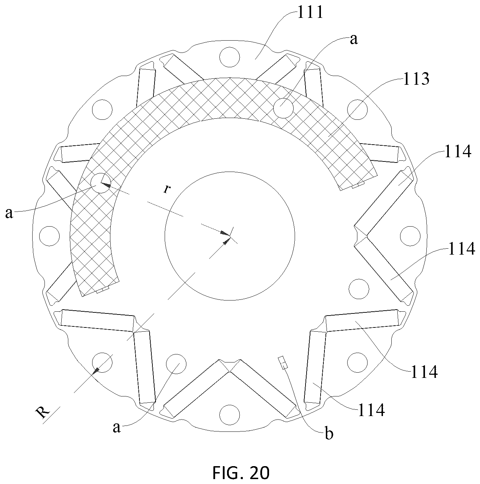

In some embodiments, as shown in FIG. 18 to FIG. 21, the rotor core 111 has an outer radius of R, where 0.5<r/R<0.9, and r is a distance between a center axis of the rod portion 121 and a center axis of the rotor iron core 111. That is, a ratio of the distance between the center axis of the rod portion 121 and the center axis of the rotor iron core 111 to the outer radius of the rotor iron core 111 is greater than 0.5 and less than 0.9, such as 0.6, 0.7 or 0.8.

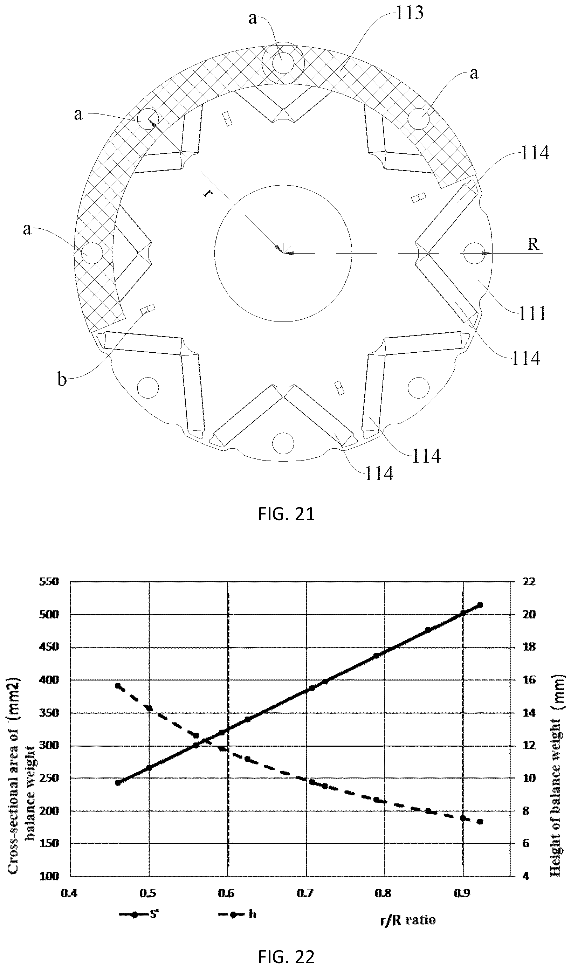

As shown in FIG. 22, when the value of r/R changes, the cross-sectional area of the balance weight 113 changes, and the height of the balance weight 113 changes. When the value of r/R gradually increases, the height of the balance weight 113 gradually decreases. When the value of r/R is greater than 0.9, the width of the balance weight 113 is insufficient. After the rotor rivets 12 are riveted, the riveting portions 123 will protrude from the external space of the rotor body 11. When the value of r/R becomes smaller, the cross-sectional area of the balance weight 113 decreases. When the weight of the balance weight 113 remains unchanged, the height of the balance weight 113 increases. Referring to the cross-sectional view shown in FIG. 9, a distance between the balance weight 113 and fixed positions of a bearing of the compressor is limited. When the height of the balance weight 113 is greater than 12 mm, an axial length of the compressor needs to be increased, and the corresponding volume and weight increase accordingly.

Therefore, in the present disclosure, the value of r/R is set to range from 0.6 to 0.9, which can not only ensure that the height of the balance weight 113 is small enough, but also ensure that the balance weight 113 has a large enough radial width and enough space for the arrangement of the riveted riveting portions 123.

Further, when the value of r/R is 0.7, the rotor rivets 12 may be provided between the magnetic poles 114, and are spaced apart from the riveting sites b in the circumferential direction. In this way, the number of the rotor rivets 12 can not only meet assembly requirements of the rotor assembly 1, but also symmetrical arrangement of the the rotor rivets 12 can be realized. Therefore, a degree of symmetry of the entire rotor magnetic circuit will be improved.

In some embodiments, the rod portion 121 has a diameter of D ranging from 3 mm to 6 mm. For example, the diameter of the rod portion 121 is 4 mm or 5 mm. It should be noted that the rod portion 121 is configured to engage with the rivet hole a, and a gap between the rod portion 121 and the inner wall of the rivet hole a ranges from 0.1mm to 0.2mm. That is, a diameter of the rivet hole a changes with the diameter of the rod portion 121, allowing the the rod portion 121 and the rivet hole a to be engaged with each other within a reasonable engagement gap range.

In addition, when the diameter of the rivet hole a changes, directions of the magnetic field lines of the magnetic circuit, a magnetic resistance, and inductance of the motor will change accordingly. When such a change is reflected in control of the motor by means of a quadrature axis inductance and a direct axis inductance. When the value of r/R is approximate to 0.7, the rivet hole a is located in the middle of the two magnetic poles 114, and the material of the riveting pin may be No. 10 cold heading steel or similar grades, whose magnetic permeability is lower than that of silicon steel or similar to that of air. In this case, the magnetic resistance in a direction of a quadrature axis magnetic circuit of the motor increases. Accordingly, the quadrature axis inductance will decrease, and the direct axis inductance will hardly change. Therefore, a difference in the quadrature axis inductance will decrease with the change of the diameter of the riveting pin.

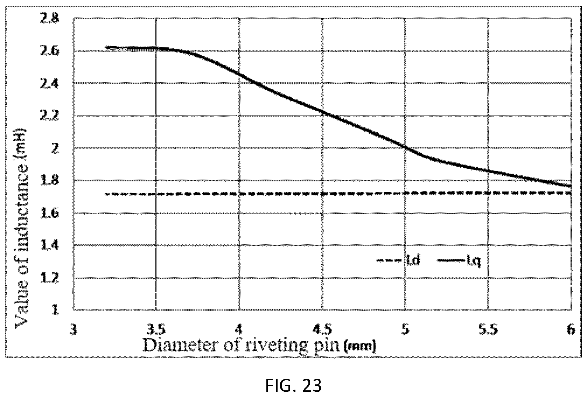

As shown in FIG. 23, when the diameter of the rod portion 121 increases from 3.2 mm to 6 mm, the quadrature axis inductance and the direct axis inductance of the motor change. It can be seen from FIG. 23 that when the diameter of the rod portion 121 is greater than 4 mm, the quadrature axis inductance drops sharply, and a difference between the quadrature axis inductance and the direct axis inductance also decreases. The magnetic resistance torque provided by the rotor will correspondingly decrease, and a power density of the motor will decrease accordingly. Therefore, by setting the diameter of the rod portion 121 within the above range, the power density of the motor can be maintained at a predetermined level.

In some embodiments, one or more of of the at least one balance weight 113 is a third balance weight. That is, in the present disclosure, shown in FIG. 11, one balance weight 113 may be provided for the rotor body 11, or as shown in FIG. 13, two balance weights 113 may be provided for the rotor body 11. When one balance weight 113 is provided, the one balance weight 113 may be served as the third balance weight. When two balance weights 113 are provided, one of the two balance weights 113 or both the balance weights 113 may be served as the third balance weight.

The riveting portion 123 is provided on the third balance weight. That is, after the rotor rivet 12 penetrates the rotor body 11, one end of the rod portion 121 facing away from the head portion 122 extends to a side of the third balance weight facing away from the end plate 112. In this case, the spinning and riveting operation may be performed on the end of the rod portion 121 by a spin riveting head, allowing the end of the rod portion 121 to be processed into the riveting portion 123, and the riveting portion 123 is pressed against the surface of the third balance weight to be limited by the surface of the third balance weight. Therefore, position-limiting fixing among the third balance weight, the end plate 112, and the rotor core 111 can be achieved.

In some embodiments, as shown in FIG. 6 to FIG. 8, the rod portion 121 has a diameter of D, and the riveting portion 123 has a maximum diameter of D0, where 1.2D≤D0≤2D. That is, the maximum diameter of the riveting portion 123 is greater than 1.2 times the diameter of the rod portion 121 and less than 2 times the diameter of the rod portion 121. For example, D0 may be 1.4D, 1.6D, or 1.7D.

By designing the structural dimensions of the riveting portion 123 and the structural dimensions of the rod portion 121 within the above-mentioned dimension range, there is a greater engagement depth between the riveting portion 123 and the second hole segment, thereby improving the riveting stability and ensuring the riveting quality of the rotor rivet 12. Further, a radial dimension of the riveting portion 123 will not be too large, and thus the riveting portion 123 will not protrude too much from the second hole segment. Therefore, the material can be saved, and other quality problem due to the protruding of the riveted riveting portion 123 from the rotor core 111 in a radial direction of the rotor core 111 can be avoided, thereby improving the rationality of the structural design.

Therefore, the arrangement of the riveting portion 123 may take into account the riveting quality and material saving at the same time.

In some embodiments, as shown in FIG. 2, the third balance weight has a radial width of W greater than 2D. That is, the radial width of the third balance weight is greater than twice the diameter of the rod portion 121. Therefore, when the third balance weight is engaged with the rod portion 121, a pin hole is required to be formed at the third balance weight, and the gap between the rod portion 121 and the inner wall of the rivet hole a ranges from 0.1 mm to 0.2 mm. Therefore, by setting the radial width of the third balance weight within the above range, it is possible to prevent the pin hole from occupying too much space on the third balance weight, thereby avoiding the impact on the structural strength of the third balance weight, and ensuring the structural stability of the third balance weight.

Therefore, after the rotor rivets 12 penetrate the third balance weight, the rotor rivets 12 will not greatly affect the structural state of the third balance weight during the spin riveting forming process of the riveting portion 123. That is, the third balance weight will not have an obvious structural fracture problem.

In some embodiments, one of the end plates 112 sandwiched between the third balance weight and the rotor core 111 has a thickness greater than or equal to 0.8 mm. That is, in actual setting, the end plate 112 located between the third balance weight and the rotor core 111 is designed to have a thickness of at least 0.8 mm, such as 1 mm, or 1.1 mm.

By setting the thickness of the end plate 112 within the above range, the structural strength of the end plate 112 itself can be effectively ensured, thereby avoiding serious deformation of the end plate 112 during the riveting process of the rotor rivet 12. Therefore, the riveting quality can be ensured, and it is beneficial to reducing natural frequency dispersion of the rotor assembly 1. In some other embodiments, the thickness of the end plate 112 should not be set too large, and the thickness of the end plate 112 needs to be set within a reasonable cost range.

In some embodiments, the riveting portion 123 has a volume greater than or equal to a volume of the head portion 122. In this way, structural strength and torsional shear resistance of the riveting portion 123 are greater, which is not only conducive to riveting molding, but also not easy for the riveting portion 123 to be broken or structurally deformed when the riveting portion 123 is riveted to the third balance weight, thereby improving the structural safety of the rotor rivet 12.

In this way, when the riveting portion 123 is pressed against a side of the first balance weight for limiting, the riveting portion 123 can provide good position limit, and the riveting portion 123 would not be separated from the third balance weight, thereby improving reliability of riveting limit.

And/or, in other embodiments, the riveting portion 123 has a diameter greater than or equal to a diameter of the head portion 122. That is, a cross-sectional area of the riveting portion 123 is greater than a cross-sectional area of the head portion 122. Similarly, the torsional shear resistance of the riveting portion 123 can also be increased. That is, torsional resistance can be enhanced, thereby preventing the riveting portion 123 from being broken from the rod portion 121 during the rotation of the rotor assembly 1. Therefore, the safety of the structural design can be improved. Moreover, since the diameter of the riveting portion 123 is greater than the diameter of the head portion 122, the riveting portion 123 has a larger limit surface than the head portion 122, and thus has better limit effect.

It should be noted that after the rotor rivets 12 penetrate the rotor body 11, as the electric compressor 100 further increases its rotational speed, the riveting portion 123 is subjected to a maximum force at this time. In the present disclosure, the volume and/or diameter of the riveting portion 123 is set to be greater than that of the head portion 122, allowing the riveting portion 123 not to be easily broken under a greater force. When the spin riveting process is used, the requirements for the riveting quality of the riveting portion 123 are also lower, which is more conducive to reducing the spinning and riveting device as well as the processing cost.

In some embodiments, the rotor rivet 12 has a hardness ranging from HRB50 to HRB200. For example, the hardness of the rotor rivet 12 is HRB70 or HRB70150. By setting the hardness of the rotor rivet 12 within the above-mentioned range, too small hardness can be avoided, the riveting effect of the rotor rivet 12 on the rotor assembly 1 can be ensured. In this way, the riveting quality can improved, and serious deformation of the head portion 122 during the riveting process can be avoided. In addition, excessive hardness can be avoided, which is conducive to reducing riveting time of the rotor rivet 12 during the riveting process, thereby improving riveting efficiency.

Embodiments of the present disclosure further provide a permanent magnet synchronous motor.

The permanent magnet synchronous motor according to the embodiments of the present disclosure comprises a stator assembly and a rotor assembly 1 rotatable relative to the stator assembly. The rotor assembly 1 is the rotor assembly 1 according to any one of the above-mentioned embodiments. The stator assembly comprises a stator core and windings. The rotor assembly 1 is disposed inside the stator core, and is rotatable in the stator core.

In the permanent magnet synchronous motor, by setting the relationship between cooperation parameters of various structural components of the rotor body 11 and tensile strength of the rotor rivet 12, layout performance of the rotor assembly 1 can be greatly optimized, and the structural strength of the rotor rivet 12 in use can be ensured. Therefore, a problem of the rotor rivets 12 being prone to be broken can be easily avoided. As a result, the rotor assembly 1 has a more compact and reliable structure, thereby ensuring riveting quality.

Embodiments of the present disclosure further provide an electric compressor 100.

In the electric compressor 100 according to the embodiments of the present disclosure, as shown in FIG. 9, the electric compressor 100 comprises a compression component 3 and a drive component. The drive component is configured to drive the compression component 3 to perform a compression operation, and the drive component comprises the permanent magnet synchronous motor according to the above-mentioned embodiments. The compression component 3 and the drive component are both arranged in a housing component of the electric compressor 100. The housing component comprises a high-pressure housing 41, a low-pressure housing 42, and a support 43 mounted between the high-pressure housing 41 and the low-pressure housing 42.

As shown in FIG. 16, the low-pressure housing 42 is mounted at a left side of the support 43, and a low-pressure chamber 421 for the drive component is defined by the the low-pressure housing 42 and the support 43. The low-pressure housing 42 has a refrigerant inlet 422. The high-pressure housing 41 is mounted at a right side of the support 43, and a high-pressure chamber 411 for mounting the compression component 3 is defined by the high-pressure housing 41 and the support 43. The high-pressure housing 41 has a refrigerant outlet 412. When the electric compressor 100 is in operation, a low-pressure refrigerant enters the low-pressure chamber 421 from the refrigerant inlet 422 on the low-pressure housing 42 and passes through the support 43 to enter the compression component 3 to be compressed. The compressed high-pressure refrigerant is discharged into the high-pressure chamber. 411, and then is discharged out of the electric compressor 100 from the refrigerant outlet 412 of the high-pressure housing 41. As shown in FIG. 16, a cover plate 44 is connected to a side of the low-voltage housing 42 facing away from the high-voltage housing 41. A mounting space is defined between the cover plate 44 and the low-voltage housing 42. The electronic control component 5 is provided in the mounting space, and the electronic control component 5 is configured to control an operation state of the permanent magnet synchronous motor.

In the electric compressor 100, by arranging the permanent magnet synchronous motor according to the above-mentioned embodiments, the electric compressor 100 has a stable operation state, and it is ensured that the drive component can accurately and reliably drive the compression component 3 to operate, thereby achieving stable output of the high-pressure refrigerant.

Embodiments of the present disclosure further provide an air conditioning system 200.

In the air conditioning system 200 according to the embodiments of the present disclosure, as shown in FIG. 10, the air conditioning system 200 is provided with the electric compressor 100 according to the above-mentioned embodiments. During an operation of the electric compressor 100, it is not easy for the electric compressor 100 to stop its operation due to the failure of the rotor assembly 1. By providing the electric compressor 100, the air conditioning system 200 has more stable heat exchange function, and a temperature state in the space can be accurately and timely adjusted by the air conditioning system 200.

Embodiments of the present disclosure further provide a vehicle 1000.

In the vehicle 1000 according to the embodiments of the present disclosure, as shown in FIG. 10, the vehicle 1000 comprises a vehicle body 300 and an air conditioning system 200 mounted on the vehicle body 300. The air conditioning system 200 of the vehicle 1000 is the air conditioning system 200 in the above-mentioned embodiments. By providing the above-mentioned air-conditioning system 200 to perform airflow heat exchange on an internal space of the vehicle body 300, a space temperature within the vehicle body 300 can accurately meet temperature requirements of users, thereby improving riding experience of the users.

It should be noted that the vehicle 1000 according to the embodiments of the present disclosure may be a new energy vehicle. In some embodiments, the new energy vehicle may be a pure electric vehicle with a motor as a main drive force. In other embodiments, the new energy vehicle may also be a hybrid vehicle with an internal combustion engine and a motor as the main drive force simultaneously. Regarding the internal combustion engine and the motor that provide the drive force for the new energy vehicle mentioned in the above embodiments, the internal combustion engine may use gasoline, diesel, hydrogen, and the like as fuel, while the motor may use power batteries, hydrogen fuel cells, and the like to generate electric energy, which is not specifically limited herein. It should be noted that this is merely an exemplary description of the structure of the new energy vehicle and is not intended to limit the scope of the present disclosure.

In the description of the present disclosure, it should be understood that the orientation or position relationship indicated by the terms "center", "longitudinal", "transverse", "length," "width," "thickness," "upper," "lower," "front," "rear," "left," "right," "vertical," "horizontal," "top," "bottom," "inner," and "outer," "clockwise," "counterclockwise," "axial direction," "radial direction," and "circumferential direction" etc. is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of indicated technical features. Therefore, the features defined with "first" and "second" may explicitly or implicitly comprise at least one of the features. In the description of the present disclosure, "plurality" means more than two, unless otherwise specifically defined.

In the present disclosure, unless otherwise clearly specified and limited, terms such as "install," "connect," "connect to," "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

In the specification, the description of the reference terms such as "one embodiment," "some embodiments," "example," "specific example," or "some example" means that the specific features, structures, materials or characteristics described with reference to the embodiment or example are comprised in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine different embodiments or examples and features of different embodiments or examples described in this specification, unless they are contradictory to each other.

Although embodiments of the present disclosure are illustrated and described above, it can be understood that the above embodiments are illustrative and should not be construed as limitations of the present disclosure. Those skilled in the art can make changes, modifications, substitutions, and variations to the above embodiments within the scope of the present disclosure.

## Claims

1. A rotor assembly, comprising:
a rotor body comprising a rotor core, end plates, and a balance weight, a permanent magnet being embedded within the rotor core, the end plates being arranged respectively at two axial ends of the rotor core, and the balance weight being disposed at a side of at least one of the end plates facing away from the rotor core; and
a rotor rivet axially penetrating the rotor body to fix the rotor body into one piece, the rotor rivet comprising a rod portion, a head portion, and a riveting portion, wherein the head portion and the riveting portion are located respectively at two ends of the rod portion in a length direction of the rod portion,
wherein one or more of the balance weight is a first balance weight , wherein the first balance weight having a rivet hole, the rivet hole having a first hole segment engaging with the rod portion and a second hole segment engaging with the riveting portion, the second hole segment having an expanded hole contour relative to the first hole segment, and the riveting portion being at least partially filled in the second hole segment.

2. The rotor assembly according to claim 1, wherein the second hole segment has a cross-sectional area gradually increasing in a direction away from the first hole segment.

3. The rotor assembly according to claim 1 or 2, wherein the second hole segment is fully filled with the riveting portion.

4. The rotor assembly according to claim 3, wherein the riveting portion comprises:
a sunk section located within the second hole segment; and
an exposed section located outside the second hole segment and protruding from a surface of the first balance weight.

5. The rotor assembly according to any one of claims 1 to 4, wherein:
the rod portion has a diameter of D; and
the riveting portion has a maximum diameter of D0, where 1.2D≤D0≤2D.

6. The rotor assembly according to any one of claims 1 to 5, wherein the rotor rivet has a hardness ranging from HRB50 to HRB200.

7. The rotor assembly according to any one of claims 1 to 6, wherein:
the riveting portion is of an imperforate solid structure; and
the rotor rivet has a tensile strength τ satisfying 0.2·t≤M·r·π·(n/D)²/225≤0.7·t, where:
r represents a distance between a central axis of the rod portion and a central axis of the rotor core;
M is a mass of the balance weight;
n is a maximum rotational speed of the rotor assembly; and
D is a diameter of the rod portion.

8. The rotor assembly according to any one of claims 1 to 7, wherein:
the rotor body has magnetic poles with a number of A; and
a number of the rotor rivet is B, where B≤A-2.

9. The rotor assembly according to any one of claims 1 to 8, wherein the rotor rivet is disposed between two adjacent magnetic poles of the rotor body.

10. The rotor assembly according to any one of claims 1 to 9, wherein:
the rotor rivet comprises a plurality of rotor rivets arranged at intervals in a circumferential direction of the rotor core; and
the riveting portions of the plurality of rotor rivets are located at a side of the rotor core in an axial direction of the rotor core.

11. The rotor assembly according to any one of claims 1 to 10, wherein the rotor core has an outer radius of R, where 0.5<r/R<0.9.

12. The rotor assembly according to any one of claims 1 to 11, wherein the rod portion has the diameter of D ranging from 3 mm to 6 mm.

13. The rotor assembly according to any one of claims 1 to 12, wherein two balance weights of different masses are arranged respectively at two sides of the rotor body, the heavier balance weight of the two balance weights having the mass of M.

14. The rotor assembly according to any one of claims 1 to 13, wherein:
at least one balance weight is a third balance weight; and
the riveting portion is disposed at the third balance weight; and
the third balance weight has a radial width of W greater than 2D.

15. The rotor assembly according to any one of claims 1 to 14, wherein the end plate sandwiched between the rotor core and the balance weight on which the riveting portion is disposed has a thickness greater than or equal to 0.8 mm.

16. The rotor assembly according to any one of claims 1 to 15, wherein:
the riveting portion has a volume greater than or equal to a volume of the head portion; and/or
the riveting portion has a diameter greater than or equal to a diameter of the head portion.

17. A permanent magnet synchronous motor, comprising:
a stator assembly; and
a rotor assembly according to any one of claims 1 to 16, the rotor assembly being rotatable relative to the stator assembly.

18. An electric compressor, comprising:
a compression component; and
a drive component driving the compression component to perform a compression operation, the drive component comprising a permanent magnet synchronous motor according to claim 17.

19. An air conditioning system, comprising an electric compressor according to claim 18.

20. A vehicle, comprising:
a vehicle body; and
an air conditioning system according to claim 19, the air conditioning system being mounted at the vehicle body.
